# EUROPEAN PATENT APPLICATION

(11) **EP 4 567 533 A1**
(43) Date of publication of application: **11.06.2025**
(21) Application number: 23214467.5
(22) Date of filing: 05.12.2023
(51) Int. Cl.: G05B 17/02, G05B 19/418, H04L 67/12

(54) **DIGITAL TWINS POWERED BY AI IN EDGE COMPUTING**

(71) Applicant: Competence Center I4byDesign Private Company, 57001 Thessaloniki (GR)
(72) Inventor: TZOVARAS, DIMITRIOS, 57001 THESSALONIKI (GR); IOANNIDIS, DIMOSTHENIS, 57001 THESSALONIKI (GR); SOUGLES, CHRISTOS, 57001 THESSALONIKI (GR); KOUZINOPOULOS, CHARALAMPOS, 57001 THESSALONIKI (GR); IAKOVOU, PETROS, 57001 THESSALONIKI (GR); TSITOURIDIS, IOANNIS, 57001 THESSALONIKI (GR)
(74) Representative: Perivolaris, Georgios

(57) **Abstract**

The invention concerns an OPC-UA (Open Protocol Communications Unified Architecture) system and its use in creating light digital cognitive twins for use in industrial automation, especially in edge IoT devices. OPC UA clients can retrieve real-time data updates and historical data for analysis and interaction with complex data structures. Cognitive Digital Twins (CDTs) represent a significant evolution in digital twin technology, integrating cognitive abilities into the digital representations of physical assets. The lightweight cognitive and interlinked digital twin embedded system a) is connected to digital assets provided by PLC server (or relevant edge IoT-enabled architecture) and b) is powered by a lightweight Open Protocol Communications Unified Architecture (OPC-UA) to enable seamless and continuous generation and update of the digital twin.

## Description

### Technical field of the invention

The invention concerns a fundamental smart embedded system to enhance lightweight cognitive digital twin generation in industrial processes & environments. The invention uses an OPC-UA (Open Protocol Communications Unified Architecture) system as a mean of interactions between the embedded systems that employ cognitive digital twins and the industrial assets.

### State of the art

Lightweight cognitive digital twins running on the edge is a very challenging and emerging domain, and the goal of the invention is to contribute with a lightweight cognitive embedded system design proposal along with relevant firmware.

### Digital Twins:

Digital twins is a mean to build digital replicas that mirror their physical counterparts in detail, the system paves the way for virtual experimentation and control. These digital twins transcend mere simulations; they offer a transparent view of real-time operations, serving as predictive tools that provide insights tailored to each machine's distinct attributes.

This forward-thinking approach to maintenance is a marked shift from conventional reactive methods. Through the prism of digital twins, maintenance evolves into a proactive, dynamic process, reducing downtime and enhancing efficiency. The capability to virtually simulate diverse scenarios empowers engineers and technicians to foresee challenges and devise solutions before they are implemented. This perspective is crucial in transforming the maintenance domain.

Historical data indicates that similar systems have been adopted across diverse industrial sectors, including manufacturing. Thanks to the incorporation of AI-driven trend analysis, digital twin innovations, and predictive maintenance techniques, these sectors have witnessed remarkable improvements in operational efficiency, cost-effectiveness, and resource management.

In summary, through its innovative use of interconnected cognitive digital twins and AI-driven analysis, this system represents a paradigm shift in industrial processes. It signifies a move from server-dependent, equation-based twins to more elegant, data-driven models created on the device, revolutionizing operations, maintenance, and sustainability in various sectors.

### Cognitive Digital Twins:

Cognitive Digital Twins (CDTs) represent a significant evolution in digital twin technology, integrating cognitive abilities into the digital representations of physical assets. These systems are defined by their capability to achieve cognition elements like memory, perception, and reasoning. A typical CDT includes data from construction information, facility management, and real-time data from Building Automation Systems (BAS), enhanced with machine learning and cloud-based computational resources.

In facilities management, the development of CDTs involves integrating Facilities Information Models with real-time and historical data for information aggregation, exploration, and visualization.

The concepts of Digital Thread and Autonomous Systems are central to the development of CDTs. The Digital Thread provides an integrated view of a physical entity's lifecycle, acting as the IT infrastructure backbone. At the same time, Autonomous Systems are self-governing and capable of making independent decisions in evolving environments.

However, the development of CDTs faces several challenges. These include structuring diverse and complex facility data, ensuring data security, and handling real-time data streaming. Addressing these challenges requires coherent data management approaches, efficient memory utilization for data storage, and advanced reasoning and problem-solving capabilities, often relying on machine learning and cloud resources.

Overall, CDTs extend the functionality of traditional digital twins by incorporating cognitive functions. This enables them to dynamically process and respond to complex scenarios, optimizing facilities management, improving sustainability, and enhancing decision-making processes. Integrating technologies such as IoT, AI, and cloud computing is crucial in this development, along with addressing challenges in data management, security, and system interoperability.

Other problems related with DT implementations include spatial commitment, high power and computing power need. No agnostic, cognitive models for digital twins.

### OPC-UA Network Abstract Description:

OPC UA (Open Platform Communications Unified Architecture) is a communication protocol for industrial machines. It's a set of standards for connecting, controlling, and managing industrial devices and systems. OPC UA allows different devices and applications in industrial settings to exchange data and information. It's designed to meet modern industrial needs like security, reliability, flexibility, and interoperability.

Critical features of OPC UA include:
- **Openness:** OPC UA is built on open standards, allowing companies and software engineers to create applications and devices that follow this protocol without being limited to specific vendors.
- **Encryption and Security:** OPC UA includes robust security features like authentication, encryption, and access control. This is crucial in industrial systems in which protecting data and systems is essential.
- **Interoperability:** OPC UA allows different devices and systems to exchange information, regardless of provider or operating system. This makes it easier to integrate and share data across various platforms.
- **Flexibility and Extensibility:** OPC UA can adapt to different application needs by making structured data available in various ways. It's also extensible, allowing for new features without overhauling the core system.
- **Reliability and Performance:** OPC UA ensures reliable and flexible communication with mechanisms for confirming message delivery.

Overall, OPC UA offers a comprehensive approach to creating secure, reliable, and interoperable industrial systems. Its benefits in industrial environments include supporting innovative application development, flexible device interaction, and secure communication. This helps industries meet the demands and challenges of the industry 4.0.

### Summary presentation of the invention

Development and implementation of an advanced Open Platform Communications Unified Architecture (OPC-UA) network, purposed to facilitate the creation and management of edge Cognitive Digital Twins
At the heart of the system lies a sophisticated technological component integration that enables seamless data collection and management. Strategically positioned sensors within each machine transform them into data-generating nodes. This complex network of nodes, combined with the Programmable Logic Controller (PLC), facilitates data acquisition, laying the groundwork for the entire ecosystem.

The system's scalability stands out, especially in today's rapidly evolving industrial landscape. Utilizing the Local Area Network (LAN) protocol creates a digital network connecting all the PLCs and their corresponding machines. The OPC-UA Client emerges as a central hub in this system, channelling data streams and deriving invaluable insights. This setup aligns with the overarching objective to develop an advanced OPC-UA network that supports the creation and management of interconnected cognitive digital twins.

From a hardware perspective, the project is geared towards supporting and developing a cognitive digital twin model. This model is architected to interact dynamically with adjacent hardware-enabled digital twins, thereby supporting an interconnected digital ecosystem. It is important to note that while the hardware itself does not constitute the cognitive aspect of the digital twin, it plays an indispensable role as an enabler of this technology. The innovation at the heart of this project lies in introducing a novel, low-power, self-sufficient edge device. This device is a game-changer in digital cognitive twin models, which have historically depended on high-powered computing resources. By enabling the deployment of lightweight digital twin models directly on the device, the project signifies a paradigm shift towards more accessible, efficient, and versatile digital twin technology. The implications of this development are profound, promising to extend the reach, applicability, and impact of digital twin technology across various sectors.

Concluding the basic characteristics of the invention, it concerns a lightweight cognitive and interlinked digital twin embedded system which a) is connected to digital assets provided by PLC server (or relevant edge IoT-enabled architecture) and b) is powered by an Open Protocol Communications Unified Architecture (OPC-UA) to enable seamless and continuous generation and update of the digital twin.

The Open Protocol Communications Unified Architecture (OPC-UA) a) is connected by a lan with one PLC server further linked with an industrial machine monitored by a sensor and b) is powered by AI, so that to produce a cognitive digital twin of the machine.

The Open Protocol Communications Unified Architecture (OPC-UA) can be linked with more than PLC servers and produce a corresponding number of cognitive digital twins.

The output of the Open Protocol Communications Unified Architecture (OPC-UA) is a message for maintenance of the machine or part of it.

### Problems that the invention solves

The OPC UA Client is designed so that a lightweight version of the Cognitive Digital Twins (CDTs) can run on it. Additionally, the use of a USB accelerator can improve the performance of the OPC UA Client by allowing a more demanding process to run. This OPC UA Client functionality significantly advances industrial and operational applications. It is tailored to address the growing need for efficient and responsive digital twins in complex industrial environments.

Central to this enhancement is the ability of the OPC UA Client to not only integrate and manage CDTs but also to execute a scaled-down version of these digital twins. This capability ensures the system remains agile and responsive, even when full-scale CDTs might be resource-intensive or unnecessary. By running a light version of the CDT, the system can maintain operational efficiency and conserve computational resources, which is particularly crucial in environments where hardware simultaneously handles multiple demanding applications.

This functionality is particularly beneficial for edge computing applications with limited local memory and processing power. It allows for effective decentralization, enabling remote applications to run smoothly without reliance on continuous server communication or heavy data processing. The lightweight CDTs ensure that essential data and controls remain accessible and manageable at the network's edge.

In summary, adding this functionality to the OPC UA Client system significantly enhances its utility in managing Cognitive Digital Twins. It provides a versatile, scalable, and efficient solution for integrating diverse industrial systems and IoT infrastructures into a unified network.

### OPC-UA Network Contribution to Building Cognitive Digital Twins

The development of an open-source OPC UA Client significantly advances Cognitive Digital Twins (CDTs), particularly in industrial and operational applications. This project concerns a system manager that handles operations across multiple OPC UA servers, a key component in modern industrial systems.

At its core, the OPC UA Client offers several functionalities crucial for the seamless integration and management of CDTs. It starts with the ability to register an OPC UA server by recording its details in a static document, establishing the groundwork for further interactions. Once registered, the Client can connect to the OPC UA server through its unique address space. This connection is vital to access the Server's resources and capabilities.

A significant feature of the Client is its ability to understand the connected OPC UA server's architecture. This includes the Server's object-oriented structure, the devices it controls, and the relationships between these elements. This understanding is crucial in knowing the Server's variables and capabilities, an essential aspect of building a comprehensive digital twin.

The client system goes further, utilizing the various utilities of each Server. This includes subscribing to server variables and accessing methods that the Server can execute. These functions enhance the Client's interaction with the Server, allowing for a dynamic and responsive system.

Additionally, the Client can disconnect from any OPC UA server and even remove a server from the list of registered servers. This adaptability is crucial for maintaining and managing the network of servers effectively.

Optimization is a cornerstone of this system. Every client operation runs on a separate thread of the Client's hardware core, ensuring efficient operation. These threads can handle multiple sub-threads, each dedicated to specific tasks as the Client requires.

The OPC-UA network's contribution to building CDTs encompasses several key areas. It enables edge computing and local memory management, which is crucial for remote applications where decentralization is necessary. Efficiency is another critical aspect for conserving computing power in environments where the same hardware is responsible for running heavy-duty applications.

Scalability is a fundamental feature, allowing the system to accommodate increasing loads by adding more OPC UA servers as needed. This ensures that the system can grow in tandem with operational demands. System unification is a reality, leading to uniform data sets from the IoT infrastructure to the CDT model. This uniformity is essential for consistency and reliability in data handling.

A standout aspect of the system is its information model-based protocol. Unlike traditional systems that transfer just a list of monitored values, this protocol carries information structured following object-oriented relations as they exist on the server side. As a result, the DT model of each application is identical to each Server's information model, transferred in the form of an XML file. This approach reduces the need for manual design of the digital twin model, as the system architecture is formed automatically during the OPC-UA server's development.

In conclusion, the OPC-UA Client system is instrumental in enhancing the capabilities and efficiency of building and managing Cognitive Digital Twins. It provides a robust, scalable, and efficient solution for integrating diverse industrial systems and IoT infrastructures into a cohesive and responsive network.

### Disclosure of the invention

OPC UA clients can retrieve real-time data updates and historical data for analysis and interaction with complex data structures. Cognitive Digital Twins (CDTs) represent a significant evolution in digital twin technology, integrating cognitive abilities into the digital representations of physical assets.

A significant feature of the Client is its ability to understand the connected OPC UA server's architecture. This includes the Server's object-oriented structure, the devices it controls, and the relationships between these elements. This understanding is crucial in knowing the Server's variables and capabilities, an essential aspect of building a comprehensive digital twin.

The client system goes further, utilizing the various utilities of each Server. This includes subscribing to server variables and accessing methods that the Server can execute. These functions enhance the Client's interaction with the Server, allowing for a dynamic and responsive system.
✔ The OPC-UA Client extends beyond mere data gathering. It cooperates with an advanced Artificial Intelligence model, constantly analyzing the data stream. This analysis is essential for the dynamic and adaptive nature of the cognitive digital twins. These twins are not static simulations but proactive learning models that evolve based on real-time operational data, embodying the project's vision of hardware-agnostic AI simulations.

Additionally, the Client can disconnect from any OPC UA server and even remove a server from the list of registered servers. This adaptability is crucial for maintaining and managing the network of servers effectively.

Optimization is a cornerstone of this system. Every client operation runs on a separate thread of the Client's hardware core, ensuring efficient operation. These threads can handle multiple sub-threads, each dedicated to specific tasks as the Client requires.

The OPC-UA network's contribution to building CDTs encompasses several key areas. It enables edge computing and local memory management, which is crucial for remote applications where decentralization is necessary. Efficiency is another critical aspect for conserving computing power in environments where the same hardware is responsible for running heavy-duty applications.

Scalability is a fundamental feature, allowing the system to accommodate increasing loads by adding more OPC UA servers as needed. This ensures that the system can grow in tandem with operational demands. System unification is a reality, leading to uniform data sets from the IoT infrastructure to the CDT model. This uniformity is essential for consistency and reliability in data handling.

A standout aspect of the system is its information model-based protocol. Unlike traditional systems that transfer just a list of monitored values, this protocol carries information structured following object-oriented relations as they exist on the server side. As a result, the DT model of each application is identical to each Server's information model, transferred in the form of an XML file. This approach reduces the need for manual design of the digital twin model, as the system architecture is formed automatically during the OPC-UA server's development.

### OPC-UA Server Functionality

OPC UA servers are crucial in an extensive industrial framework or complex monitoring system with multiple sensor signals. They provide unified communication, flexible data representation, real-time event notification, secure data exchange, remote procedure execution, session management, integration with legacy systems, discoverability, historical data access, companion specifications, and scalability. These servers ensure seamless interoperability, security, and efficiency across diverse industrial devices and applications.

OPC UA servers function as data hubs, facilitating standardized communication between various industrial components, all delivered to the unit's OPC-UA client. They enable real-time and historical data exchange, supporting complex data structures and types. These servers manage sessions, allowing secure connections between clients and servers. Additionally, they provide mechanisms for event handling, notifying clients of changes or incidents in the system.

Furthermore, they support remote procedure calls, allowing clients to execute functions on the server side. They contribute to system integration by providing a discoverable environment where clients can find available information models and objects. The servers also implement security measures, ensuring data integrity, confidentiality, and authentication in communication.

Regarding system scalability, OPC UA servers are designed to handle large and expanding systems, accommodating the growing complexity of industrial processes. They offer standardized ways to access historical data, supporting the analysis and monitoring of system performance over time. By this, OPC UA servers contribute to the seamless integration of new devices and technologies into the existing infrastructure of edge devices.

### OPC-UA Client Functionality

OPC UA client is integral to our merged communication system, facilitating efficient and secure communication with OPC UA servers. Its functionality enables seamless interaction with diverse devices and systems, ensuring reliable data exchange in real-time and historical contexts. Its primary role is to initiate and manage communication sessions with OPC UA servers and to establish secure connections to servers, allowing them to read, write, and monitor data points within the system. OPC UA clients can retrieve real-time data updates and historical data for analysis and interaction with complex data structures.

Furthermore, OPC UA clients support various communication profiles, ensuring compatibility with different devices and protocols. They provide a standardized interface for accessing information from OPC UA servers, abstracting the underlying complexities and allowing for interoperability in heterogeneous industrial environments.

OPC UA clients serve as the interface through which users and applications interact with OPC UA servers, enabling seamless and standardized communication in industrial automation.

Necessary service packages of the OPC UA protocol are described below:
Subscribe: Tracking changes in the value of a variable.

The OPC UA protocol foresees the existence of entities called Subscriptions containing another entity, the SubHandler. The latter includes the datachange_notification function with the block of commands executed whenever a change in the value of a subscribed variable is detected.

Every time the subscription to a specific variable is requested from the platform, the parameter of the subscription period should be defined, the period during which a check will be made for any change in the value of the parameter.

When starting each Client (instance of the opcUaClient class intended for connecting to a specific server), two empty lists are created: the subVarIDList and the subscriptionsList. Whenever the subscription to a variable is requested, the opcua id of the variable is stored in subVarIDList while the object of type Subscription is stored in subscriptionsList. In this way, every time a request is made from the platform for a subscription to a variable, the Client first checks for any subscription in the list and, in this case, displays a corresponding message.

Unsubscribe: Termination of a subscription that has been ordered and created.

When the "unsubscription" of a variable subscribed to by the Client is requested, it is checked that the id of the variable is not registered in the subVarIDList list. In this case, the Subscription instance from the subscriptions List is used to delete it with the self-command delete of the class. Similarly, the corresponding fields of the subVarIDList and subscriptions List lists are deleted.

If there is no field in the subVarIDList with the given variable id, a corresponding message is displayed to the user/UI.

Method Call: Calling a function of an OPC UA server. In OPC UA, at least in most server development environments, it is possible to create a server process. The function is developed within the server code and is called externally by the Client. The Client requests to call the procedure from the competent Server. The message includes the id of the method and all the necessary arguments to call it.

Read: Reading the value of an OPC UA variable.

With a simple request, the Client requests from a server to receive the value of a variable at a specific time.

Write: Write a value to an OPC UA variable.

With a simple request, the Client asks a server to determine the value of a server variable. This is not always allowed and depends on how a variable is defined when programming the Server. The OPC UA cache variables are distinguished into:
- Writable: Their value can be changed by the address space
- Non-writable: Their value can be changed by the address space but only by the Server's internal processes and its inputs from the physical world.

Delegated: Writable variables that, however, the argument must meet some specifications to be written as the value of the variable (e.g., be within a range of values)

### OPC-UA Client Additional Functionality

This functionality is particularly beneficial for edge computing applications with limited local memory and processing power. It allows for effective decentralization, enabling remote applications to run smoothly without reliance on continuous server communication or heavy data processing. The lightweight CDTs ensure that essential data and controls remain accessible and manageable at the network's edge.

In summary, adding this functionality to the OPC UA Client system significantly enhances its utility in managing Cognitive Digital Twins. It provides a versatile, scalable, and efficient solution for integrating diverse industrial systems and IoT infrastructures into a unified network.
A) The proposed solution is designed to be agnostic concerning the hardware on which various AI simulations operate. This characteristic is pivotal, as it permits the on-device learning, representation, and execution of Digital Twins. Such a design ensures a high degree of flexibility and adaptability, enabling a seamless integration of a diverse array of AI models and simulations into the system.
B) Enablement of localized digital twin models, achieved through a well-structured methodological framework instead of solely relying on theoretical mathematical constructs

Γ) Unlike traditional digital twins, which were often developed on remote servers using complex mathematical models, this system introduces a novel approach. The cognitive digital twins in this architecture are elegantly constructed directly on the device, leveraging the collected data. This shift represents a significant departure from previous practices where digital twins were heavy-loaded and reliant on powerful server-side computations.

### OPC-UA Network Contribution to Building Cognitive Digital Twins

The development of an open-source OPC UA Client significantly advances Cognitive Digital Twins (CDTs), particularly in industrial and operational applications. This project concerns a system manager that handles operations across multiple OPC UA servers, a key component in modern industrial systems.

At its core, the OPC UA Client offers several functionalities crucial for the seamless integration and management of CDTs. It starts with the ability to register an OPC UA server by recording its details in a static document, establishing the groundwork for further interactions. Once registered, the Client can connect to the OPC UA server through its unique address space. This connection is vital to access the Server's resources and capabilities.

A significant feature of the Client is its ability to understand the connected OPC UA server's architecture. This includes the Server's object-oriented structure, the devices it controls, and the relationships between these elements. This understanding is crucial in knowing the Server's variables and capabilities, an essential aspect of building a comprehensive digital twin.

The client system goes further, utilizing the various utilities of each Server. This includes subscribing to server variables and accessing methods that the Server can execute. These functions enhance the Client's interaction with the Server, allowing for a dynamic and responsive system.

Additionally, the Client can disconnect from any OPC UA server and even remove a server from the list of registered servers. This adaptability is crucial for maintaining and managing the network of servers effectively.

Optimization is a cornerstone of this system. Every client operation runs on a separate thread of the Client's hardware core, ensuring efficient operation. These threads can handle multiple sub-threads, each dedicated to specific tasks as the Client requires.

The OPC-UA network's contribution to building CDTs encompasses several key areas. It enables edge computing and local memory management, which is crucial for remote applications where decentralization is necessary. Efficiency is another critical aspect for conserving computing power in environments where the same hardware is responsible for running heavy-duty applications.

Scalability is a fundamental feature, allowing the system to accommodate increasing loads by adding more OPC UA servers as needed. This ensures that the system can grow in tandem with operational demands. System unification is a reality, leading to uniform data sets from the IoT infrastructure to the CDT model. This uniformity is essential for consistency and reliability in data handling.

A standout aspect of the system is its information model-based protocol. Unlike traditional systems that transfer just a list of monitored values, this protocol carries information structured following object-oriented relations as they exist on the server side. As a result, the DT model of each application is identical to each Server's information model, transferred in the form of an XML file. This approach reduces the need for manual design of the digital twin model, as the system architecture is formed automatically during the OPC-UA server's development.

In conclusion, the OPC-UA Client system is instrumental in enhancing the capabilities and efficiency of building and managing Cognitive Digital Twins. It provides a robust, scalable, and efficient solution for integrating diverse industrial systems and IoT infrastructures into a cohesive and responsive network.

### Plate

The OPC-UA runs through a plate that consists0852 of a microprocessor (1), memory RAM (2) and eMMC (3), wireless connectivity (4), USB Ports (5), DC Power Supply (6), GPIO Pins (7), a micro-SD connector (8), a coin cell battery holder (9), an RS485 Port (10) and a Real-Time Clock (RTC).

More specifically, the basic parts of the plate are the following:

### Microprocessor

The heart of the PCB is a powerful ARM Cortex-A76 processor running at 2.4 GHz, for computational capability required for industrial tasks.

### Memory

8 GB of RAM ensures efficient multitasking and data handling in complex industrial applications.

The plate includes an embedded multi-Media Card (eMMC) storage for reliable and high-speed data storage.

### Input/Output

Concerning Input/Output, there are 40 General Purpose Input/Output (GPIO) pins, facilitating versatile interfacing with external devices and sensors.

There are also four USB 2.0 ports for additional connectivity options for peripherals.

### Power Supply

A wide-ranging DC power supply, supporting voltages from 9V to 36V, ensures stability in diverse industrial power environments.

### Connectivity

One Ethernet port provides a reliable and high-speed wired network connection.

RS485 port enables robust and long-distance communication in industrial settings.

Integrated wireless circuit for wireless communication, enhancing flexibility in data transfer.

### Storage

A Micro SD slot for expandable storage, catering to applications with large data requirements.

### Additional features

A coin cell battery holder nsures uninterrupted RTC operation during power outages.

The inclusion of an Real-Time Clock (RTC) ensures accurate timekeeping, critical for timestamping data in industrial applications.

### Description of the drawings

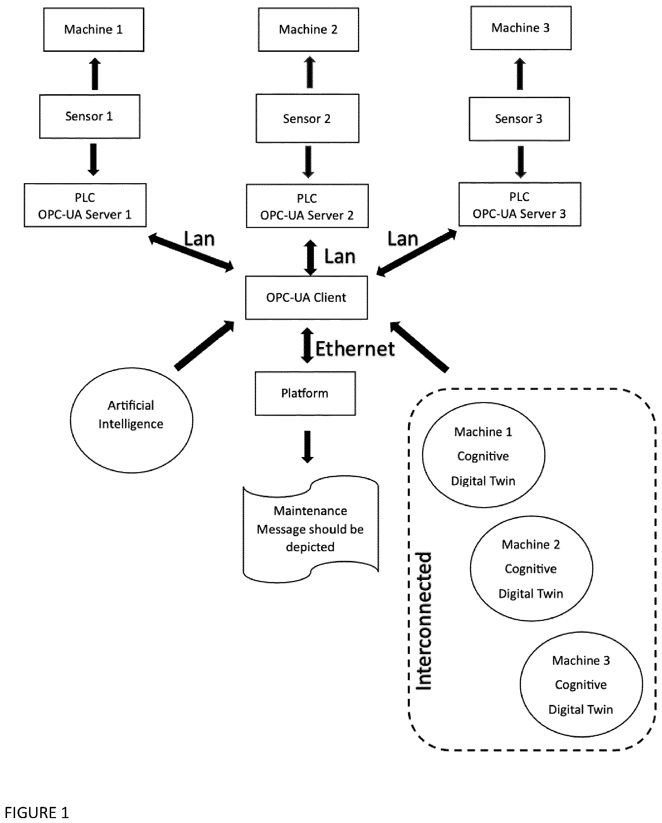

Figure 1 shows the architecture of the complete system.

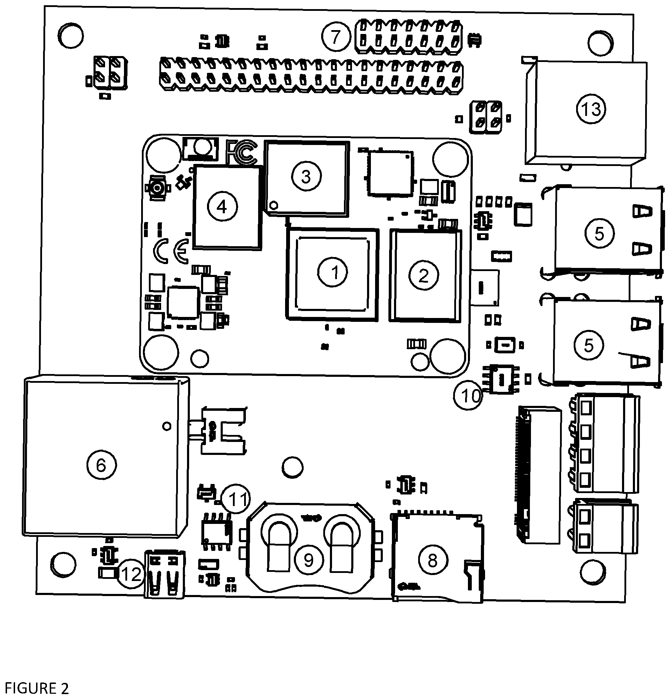

Figure 2 shows the plate, through which the OPC-UA runs, that consists of a microprocessor (1), memory RAM (2) and eMMC (3), wireless connectivity (4), USB Ports (5), DC Power Supply (6), GPIO Pins (7), a micro-SD connector (8), a coin cell battery holder (9), an RS485 Port (10) and a Real-Time Clock (RTC).

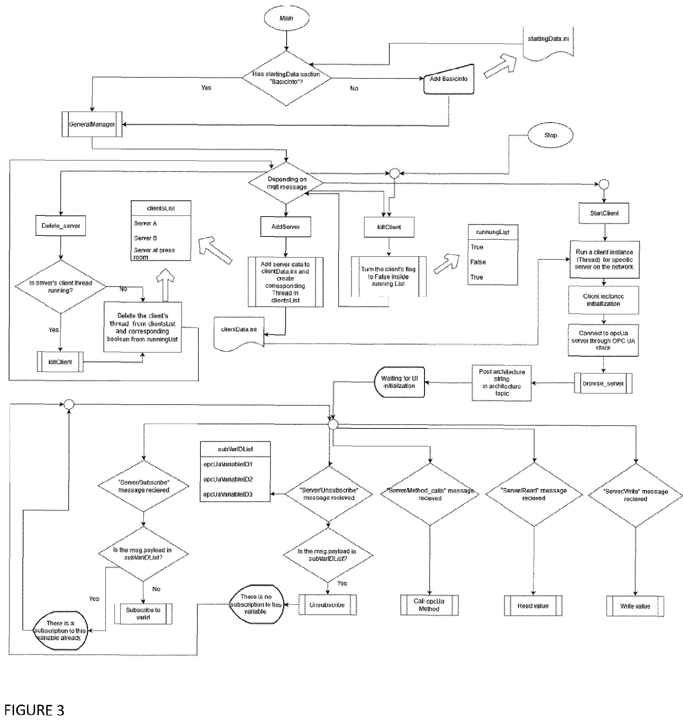

Figure 3 shows the flow diagram of the general manager program based on the OPC UA client hardware. General Manager is the OPC UA Client's main program. The system is waiting for a message to add, edit or delete a server. This being done, the clientData.ini file is modified. When the startup command is given to the system, the client starts to run an OPC UA Client instance in a different thread for every server written on the file. In each thread, depending on the user's message, the client can call one or more from the server's methods, subscribe to server's variables, read or write the values from OPC UA variables.

## Claims

1. A lightweight cognitive and interlinked digital twin embedded system which a) is connected to digital assets provided by PLC server (or relevant edge IoT-enabled architecture) and b) is powered by an Open Protocol Communications Unified Architecture (OPC-UA) to enable seamless and continuous generation and update of the digital twin.

2. A lightweight cognitive and interlinked digital twin embedded system, as described in claim 1, wherein the Open Protocol Communications Unified Architecture (OPC-UA) which a) is connected by a Ian with one PLC server further linked with an industrial machine monitored by a sensor and b) is powered by AI, so that to produce a cognitive digital twin of the machine.

3. A lightweight cognitive and interlinked digital twin embedded system, as described in the previous claims, wherein the Open Protocol Communications Unified Architecture (OPC-UA) can be linked with more than PLC servers and produce a corresponding number of cognitive digital twins.

4. A lightweight cognitive and interlinked digital twin embedded system, as described in the previous claims, wherein the output of the Open Protocol Communications Unified Architecture (OPC-UA) is a message for maintenance of the machine or part of it.
